# EUROPÄISCHE PATENTSCHRIFT

(11) **EP 2 977 135 B1**
(45) Veröffentlichungstag und Bekanntmachung des Hinweises auf die Patenterteilung: **18.04.2018**
(21) Anmeldenummer: 14178126.0
(22) Anmeldetag: 23.07.2014
(51) Int. Cl.: B23B 51/04, B23B 51/08, B23D 45/26, B26D 3/00, B26F 3/08, E04B 1/76, B26F 1/16

(54) **Vorrichtung und Verfahren zum Erstellen einer Vertiefung in Dämmstoffen**
Device and method for creating a recess in insulating materials
Dispositif et procédé d'établissement d'une empreinte dans un matériau isolant

(43) Veröffentlichungstag der Anmeldung: 27.01.2016
(73) Patentinhaber: EJOT Baubefestigungen GmbH, 57334 Bad Laasphe (DE)
(72) Erfinder: Knebel, Ulrich, 57319 Bad Berleburg-Berghausen (DE); Wied, Werner, 57319 Bad Berleburg (DE)
(74) Vertreter: Hohgardt, Martin

(56) Entgegenhaltungen:
- DE-A1- 3 321 091
- DE-U1-202012 009 691
- FR-A1- 2 707 203
- US-A- 3 854 840
- US-A1- 2002 114 677
- US-A1- 2005 053 436

## Beschreibung

Die vorliegende Erfindung betrifft eine Vorrichtung zum Erstellen einer Vertiefung in Dämmstoffen, sowie ein entsprechendes Verfahren.
Zur Befestigung von Dämmstoffen werden häufig Dämmstoffhalter verwendet. Derartige Dämmstoffhalter weisen häufig einen Dübelschaft und einen daran angeordneten Dübelteller auf. Nach der Montage befindet sich der Dübelteller entweder auf der Oberfläche des Dämmstoffs oder in einer Vertiefung in dem Dämmstoff. Für die Montage des Dämmstoffhalters in einer Vertiefung wird zunächst ein Bohrloch durch den Dämmstoff in einen Untergrund erstellt und dann mit einem speziellen Montagewerkzeug in dem Dämmstoff eine Vertiefung erstellt.
Im Stand der Technik sind verschiedene Möglichkeiten zur Bildung einer Vertiefung in dem Dämmstoff für die Montage eines Dämmstoffhalters beschrieben.

Beispielsweise beschreibt EP 1 318 250 A2 ein Montagewerkezug und einen Dübel mit Schneidvorrichtungen zum Einschneiden des Dämmstoffs. Mit Hilfe der Schneidvorrichtungen wird der Dämmstoff kreisförmig eingeschnitten. Zur Bildung der Vertiefung wird der eingeschnittene Teil des Dämmstoffs komprimiert. EP1318250A2 offenbart eine Vorrichtung mit den Merkmalen des Oberbegriffes des Anspruchs 1 und ein Verfahren gemäß dem Anspruch 11. EP 2 042 666 A2 beschreibt ein Montagewerkzeug, das an der Unterseite eine Fräsvorrichtung aufweist mit der die Vertiefung in den Dämmstoff gefräst werden kann.

Derartige Vorrichtungen und Verfahren haben allerdings den Nachteil, dass durch das Schneiden und Fräsen ein mechanischer Abrieb stattfindet mit dem Dämmstoffpartikel gelöst werden und diese in die Umwelt gelangen. Außerdem können mit den bekannten Vorrichtungen und Verfahren nur Vertiefungen gebildet werden, die eine relativ geringe Tiefe aufweisen.

Die Aufgabe der vorliegenden Erfindung ist daher, eine Vorrichtung zum Erstellen einer Vertiefung in einem Dämmstoff und ein entsprechendes Verfahren bereitzustellen, mit denen die Nachteile im Stand der Technik günstig und einfach behoben werden können.

Diese Aufgabe wird erfindungsgemäß durch die Vorrichtung und das Verfahren gemäß der unabhängigen Ansprüche gelöst.

Die erfindungsgemäße Vorrichtung zum Erstellen einer Vertiefung in einem Dämmstoff weist einen Antriebsstrang auf, wobei der Antriebsstrang in einem ersten Endbereich angepasst ist zum Verbinden mit einem Antriebswerkzeug. Erfindungsgemäß weist die Vorrichtung auch ein Schmelzmittel zum Schmelzen der Vertiefung auf, wobei das Schmelzmittel an dem Antriebsstrang angeordnet ist und sich im Wesentlichen senkrecht zum Antriebsstrang erstreckt und die Vertiefung vorzugsweise mittels Kontaktreibung in den Dämmstoff schmilzt. Daher handelt es sich bei dem Schmelzmittel bevorzugt um ein Reibmittel.

Das erfindungsgemäße Schmelzmittel, ermöglicht es, nahezu spanfrei, das bedeutet ohne das Lösen von Dämmstoffpartikeln, die in die Umwelt gelangen könnten, eine Vertiefung in der Dämmstoffoberfläche zu erstellen, wobei im Rahmen der vorliegenden Erfindung unter Schmelzen das Erweichen des Dämmstoffmaterials mit Hilfe des Einbringens einer thermischen Energie verstanden wird. Darüber hinaus weisen die mit der erfindungsgemäßen Vorrichtung gebildeten Vertiefungen durch das Schmelzen gerade Kanten auf. Diese Vertiefungen können im Vergleich zum Stand der Technik sehr tief sein, da beim Schmelzen im Gegensatz zum Komprimieren oder Fräsen nicht darauf geachtet werden muss, wohin der Dämmstoff aus der Vertiefung transportiert wird. Durch das Verschmelzen des Dämmstoffs am Randbereich der Vertiefung wird auch die strukturelle Integrität der Vertiefung nicht in Mitleidenschaft gezogen, wie es ansonsten beim Lösen von Dämmstoffpartikeln der Fall wäre.

Der erste Endbereich des Antriebsstrangs ist angepasst mit einem Antriebswerkzeug, zum Beispiel einer Bohrmaschine, verbunden zu werden. Bevorzugt handelt es sich hierbei um eine drehfeste Verbindung, d.h. mit Hilfe des Antriebswerkszeugs kann auf den Antriebsstrang eine Rotationsbewegung übertragen werden. Die Verbindung kann beispielsweise über das Einspannen des ersten Endbereichs des Antriebsstrangs in ein entsprechendes Bohrfutter des Antriebswerkzeugs hergestellt werden. Es kann sich aber auch um eine einstückige Verbindung handeln, d.h. der Antriebsstrang kann ein Teil des Antriebswerkzeugs sein.

Das Schmelzmittel ist direkt oder indirekt an dem Antriebsstrang angeordnet, wobei bei einer direkten Anordnung das Schmelzmittel direkt, d.h. ohne weitere Komponenten an dem Antriebsstrang angeordnet ist und wobei bei einer indirekten Anordnung das Schmelzmittel mittels einer oder mehrerer weiterer Komponenten an dem Antriebsstrang angeordnet ist. Beide Anordnungen bewirken, dass eine Drehbewegung des Antriebsstrangs auf das Schmelzmittel übertragen wird. Bei einer indirekten Anordnung kann beispielsweise zwischen dem Schmelzmittel und dem Antriebsstrang noch ein Getriebe angeordnet sein, beispielsweise eine Art Planetengetriebe, welches ermöglicht, dass sich das Schmelzmittel nicht gleichförmig mit dem Antriebsstrang dreht sondern schneller oder langsamer. Es ist auch denkbar, dass zwischen dem Schmelzmittel und dem Antriebsstrang ein Entkopplungsmittel vorgesehen ist, welches die Drehbewegung des Antriebsstrangs von der Drehbewegung des Schmelzmittels entkoppelt. Mit einem derartigen Entkopplungsmittel kann zum Beispiel ein Nachdrehen des Schmelzmittels realisiert werden, wenn die Drehbewegung des Antriebsstrangs bereits gestoppt wurde. Das Nachdrehen ist in diesem Fall trägheitsabhängig.

Das Schmelzmittel erstreckt sich im Wesentlichen senkrecht zum Antriebsstrang. Somit ist die Oberfläche des Schmelzmittels im Wesentlichen parallel zu der Oberfläche des Dämmstoffs, wenn der Antriebsstrang senkrecht zur Dämmstoffoberfläche ausgerichtet ist. Es ist aber auch denkbar, dass mittels einer indirekten Anordnung über ein Kugelgelenk eine rotatorische Bewegung des Schmelzmittels in alle Richtungen möglich ist, so dass das Schmelzmittel um einen durch das Kugelgelenk definierten Drehpunkt verschwenkt werden kann. Dies ermöglicht, dass die Vertiefung rechtwinklig zur Dämmstoffoberfläche eingebracht werden kann, sogar auch dann wenn das Antriebswerkzeug beziehungsweise der Antriebsstrang nicht rechtwinklig zur Oberfläche gehalten beziehungsweise geführt wird.
Erfindungsgemäß wird die Vertiefung mittels Kontaktreibung in den Dämmstoff geschmolzen. Mit Hilfe des am ersten Endbereich des Antriebsstrangs angeordneten Antriebswerkzeugs können der Antriebsstrang und das Schmelzmittel der erfindungsgemäßen Vorrichtung gedreht werden. Durch ein Vorwärtsbewegen des Antriebsstrangs und des Schmelzmittels in Richtung des Dämmstoffs kommt die Oberfläche des Schmelzmittels in Kontakt mit der Oberfläche des Dämmstoffs. Durch die Rotationsbewegung beziehungsweise Drehbewegung des Antriebsstrangs und somit auch des Schmelzmittels entsteht zwischen der räumlich feststehenden Oberfläche des Dämmstoffs und der rotierenden Oberfläche des Schmelzmittels eine Reibung.
Der im Hinblick auf diese Reibung auftretende Energieverlust wird an den betreffenden Oberflächen in Wärme umgesetzt. Diese Wärme sorgt dafür, dass der Dämmstoff in dem Bereich der von dem Schmelzmittel berührt wird, wegschmilzt. Durch das Schmelzen wird die Vertiefung gebildet. Abhängig von der Rotationsgeschwindigkeit des Antriebsstrangs und dem verwendeten Dämmstoffmaterial, wie beispielsweise Styropor, schmilzt der Teil der Oberfläche des Dämmstoffs der das Schmelzmittel berührt schneller oder langsamer.

Durch die Verwendung der erfindungsgemäßen Vorrichtung wird eine Vertiefung mit einer einheitlichen, homogenen Oberfläche gebildet.

In einer bevorzugten Ausführungsform ist die den Dämmstoff kontaktierende Seite des Schmelzmittels angepasst die Dämmstoffoberfläche ohne einen mechanischen Abrieb von Dämmstoffpartikeln zu bearbeiten. Zumindest an der den Dämmstoff kontaktierenden Seite findet kein mechanischer Abrieb, sondern ein Schmelzen statt. Selbst wenn sich an der Kontaktfläche des Schmelzmittels mit dem Dämmstoff einzelne Partikel lösen, werden diese nicht abgeführt sondern mit dem restlichen Dämmstoff verschmolzen. Beispielsweise hat die den Dämmstoff kontaktierende Seite des Schmelzmittels hierfür eine sehr geringe Oberflächenrauheit. Dies kann beispielsweise durch eine glatte Oberfläche an der den Dämmstoff kontaktierenden Seite des Schmelzmittels realisiert werden. Vorteilhaft kann durch eine geringe Oberflächenrauheit des Schmelzmittels ein gleichmäßiger Kontakt zur Dämmstoffoberfläche über die komplette Fläche der kontaktierenden Seite des Schmelzmittels hergestellt werden. Somit kann die Reibungshitze maximiert werden. Durch die geringe Oberflächenrauheit wird auch verhindert, dass aufgeschmolzener Dämmstoff an dem Schmelzmittel haften bleibt. Hierzu kann die Oberfläche auch beispielsweise eine spezielle Beschichtung aufweisen, die verhindert, dass aufgeschmolzener Dämmstoff haften bleibt. Beispielsweise kann eine Art TeflonBeschichtung angebracht werden.

In einer weiteren bevorzugten Ausführungsform ist das Schmelzmittel rund. Vorteilhaft wird dadurch eine größtmögliche Kontaktfläche für das Einschmelzen von kreisförmigen Ausnehmungen erreicht. Alternativ hierzu kann das Schmelzmittel jede beliebige Geometrie haben, zum Beispiel kann das Schmelzmittel auch dreieckig oder rechteckig sein.

In noch einer weiteren bevorzugten Ausführungsform weist das Schmelzmittel einen am Rand umlaufenden Vorsprung auf, der sich im Wesentlichen parallel zum Antriebsstrang erstreckt. Vorteilhaft wird durch diesen Vorsprung das Schmelzmittel relativ zu der Dämmstoffoberfläche fixiert. In einer bevorzugten Ausführungsform ist der Vorsprung eine Schneide. Der umlaufende Rand kann auch dafür sorgen, dass am Boden der Vertiefung eine umlaufende weitere Vertiefung erzeugt wird, die auch vorteilhaft positionsfixierend auf einen anschließend eingebrachten Druckteller eines Dämmstoffhalters wirkt, der einen komplementären umlaufenden Rand aufweisen kann.
In noch einer weiteren bevorzugten Ausführungsform besteht die den Dämmstoff kontaktierende Oberfläche des Schmelzmittels aus Metall. Dies hat den Vorteil, dass wegen der guten Wärmeleitfähigkeiten von Metall, die entstehende Reibungswärme gut an den Dämmstoff abgeführt werden kann. Weiterhin haben Metalle, beziehungsweise Metalllegierungen eine hohe Schmelztemperatur, so dass sich die Oberfläche des Schmelzmittels auch bei dem Entstehen von Reibungswärme nicht verformt. Alternativ kann die Oberfläche des Schmelzmittels aber auch aus einem gut wärmeleitenden und schwer verformbaren Kunststoffmaterial oder aus einem Mineral bestehen oder Mischungen aus Metallen, Kunststoffen und/oder Mineralien bestehen. Weiterhin kann die Oberfläche des Schmelzmittels auch eine Beschichtung aufweisen, so dass kein aufgeschmolzenes Dämmstoffmaterial an der Oberfläche des Schmelzmittels haften bleibt. Die Vorrichtung weist zum Erstellen einer Vertiefung in einem Dämmstoff weiterhin eine Anschlagscheibe auf, die ausgestaltet ist, eine Bewegung des Schmelzmittels in den Dämmstoff zu begrenzen. Vorteilhaft können hierdurch Vertiefungen in den Dämmstoff mit einer definierten Tiefe reproduzierbar hergestellt werden. In einer bevorzugten Ausführungsform ist der Umfang der Anschlagscheibe größer als der Umfang des Schmelzmittels. Dadurch kommt die Anschlagscheibe, wenn eine gewünschte Tiefe des Schmelzmittels erreicht wurde, an ihrem Umfang auf der Oberfläche des Dämmstoffs zum Aufliegen und begrenzt somit ein weiteres Vordringen des Schmelzmittels in das Dämmstoffmaterial. In einer bevorzugten Ausführungsform ist die Anschlagsscheibe relativ zum Schmelzmittel entlang des Antriebsstrangs beweglich, so dass verschiedene Tiefen an Vertiefungen möglich sind.

Dabei hängt die Tiefe der Vertiefung beispielsweise davon ab, wie weit die Dämmstoff kontaktierende Seite des Schmelzmittels von der die Dämmstoffoberfläche kontaktierende Seite der Anschlagscheibe entfernt ist. Die Anschlagscheibe kann dabei zum Beispiel an mehreren vorgegebenen Stellen am Antriebsstrang positioniert werden, so dass verschiedene vorgegebene Tiefen erreicht werden können. Es ist aber auch denkbar, dass die Position der Anschlagsscheibe entlang des Antriebsstrangs frei wählbar ist und beispielsweise mit einer Madenschraube fixiert werden kann. Auch kann eine Fixierung an dem Antriebsstrangs über federgelagerte kugelförmige Elemente an der Anschlagscheibe erfolgen. Diese Elemente können in entsprechende kugelförmige Vertiefungen am Antriebsstrang eingreifen und können somit die Position der Anschlagscheibe an dem Antriebsstrang fixieren. Alternativ ist aber auch denkbar, dass die Anschlagscheibe und das Schmelzmittel aus einem Teil hergestellt werden, d.h. einstückig sind. Verschiedene Tiefen lassen sich im Falle der Einstückigkeit der Anschlagscheibe und des Schmelzmittels beispielsweise dadurch realisieren, dass das Schmelzmittel und die Anschlagscheibe als ein Teil auswechselbar sind und so unterschiedliche Schmelzmittel mit unterschiedlichen Abständen zwischen der die Dämmstoff kontaktierende Seite des Schmelzmittels und der die Dämmstoffoberfläche kontaktierende Seite der Anschlagscheibe gewählt werden kann.

Die Anschlagscheibe führt durch ihre größere Oberfläche im Vergleich zur Oberfläche des Schmelzmittels mehr Wärme ab, so dass die Anschlagsscheibe selbst nicht als Schmelzmittel fungiert und nicht den Dämmstoff aufschmilzt. Dies kann beispielsweise noch durch die Wahl des Materials der Anschlagscheibe unterstützt werden, die beispielsweise aus einem schlecht wärmeleitenden Material hergestellt werden kann oder mit einer Beschichtung versehen werden kann, die den Reibungskoeffizienten zwischen Dämmstoff und Anschlagsscheibe vermindert, so dass es nur zu einer geringen Wärmeentwicklung kommt.

In noch einer weiteren bevorzugten Ausführungsform ist der Antriebsstrang in einem zweiten Endbereich, der dem ersten Endbereich gegenüberliegt, angepasst zum Verbinden mit einem Bohrer. Beispielsweise kann dies ein Steinbohrer sein. Der Antriebsstrang kann beispielsweise eine Aufnahme für den Bohrer aufweisen. Der Antriebsstrang und der Bohrer können aber auch einstückig ausgestaltet sein.

In einer weiteren bevorzugten Ausführungsform weist die Vorrichtung eine Zentrierspitze auf. Vorteilhaft kann hierdurch die Position des rotierenden Schmelzmittels auf der Oberfläche des Dämmstoffs festgelegt werden und weiterhin kann durch den Einsatz des Zentriermittels die Gefahr des Umherschlagens des Schmelzmittels durch eine Unwucht reduziert werden. Zum Beispiel kann die Zentrierspitze ein zylindrischer Körper sein, der in Richtung der Dämmstoffoberfläche spitz zuläuft. Das Zentriermittel kann beispielsweise an dem Antriebsstrang oder an dem Schmelzmittel angeordnet sein.

In einer bevorzugten Ausführungsform ist das Schmelzmittel lösbar an dem Antriebsstrang befestigt. Diese Befestigung kann beispielsweise über einer Spannschraube an dem Schmelzmittel erfolgen. Durch die lösbare Befestigung kann das Schmelzmittel beispielsweise entlang des Antriebsstrangs bewegt werden. In einer alternativen Ausführungsform dann das Schmelzmittel durch die lösbare Befestigung gegen ein anderes Schmelzmittel ausgewechselt werden. Eine Kombination von den beiden Alternativen ist natürlich auch möglich.

Durch das Bewegen des Schmelzmittels entlang des Antriebsstrangs können mittels einer Vorrichtung in Dämmstoffen unterschiedlich dicke bzw. tiefe Vertiefungen erzeugt werden. Dies ist insbesondere möglich, wenn die Vorrichtung einen Bohrer aufweist und/oder eine Anschlagscheibe. Ein Auswechseln des Schmelzmittels kann beispielsweise hilfreich sein, wenn der Durchmesser der Vertiefung verändert werden soll oder die Tiefe der Vertiefung geändert werden soll, hierzu wird ein Schmelzmittel gewählt, welches zum Beispiel einen größeren Abstand von der Anschlagscheibe hat. Außerdem können die Schmelzmittel unterschiedlich ausgestaltet sein, um bei unterschiedlichen Dämmstoffen die Vertiefung bestmöglich bilden zu können.

Das erfindungsgemäße Verfahren zum Erstellen einer Vertiefung in einem Dämmstoff weist die folgenden Schritte auf Drehen eines Antriebsstrangs und eines daran angeordneten Schmelzmittels, Vorwärtsbewegen des Schmelzmittels gegen einen Dämmstoff und Schmelzen einer Vertiefung in den Dämmstoff mittels Kontaktreibung zwischen dem Schmelzmittel und dem Dämmstoff.

In einer bevorzugten Ausführungsform des erfindungsgemäßen Verfahrens wird zuerst das rotierende Schmelzmittel, das im Wesentlichen parallel zu der Dämmstoffoberfläche ausgerichtet ist, mit der Oberfläche des Dämmstoffs in Kontakt gebracht. Danach wird durch eine Vorwärtsbewegung des Antriebswerkzeugs das Schmelzmittel in den Dämmstoff hineinbewegt, um somit eine Vertiefung in der Dämmstoffoberfläche zu schaffen. In einer vorteilhaften Variante des Verfahrens schmilzt das Schmelzmittel die Vertiefung in den Dämmstoff mit einer den Dämmstoff kontaktierenden Oberfläche, die angepasst ist, die Dämmstoffoberfläche ohne einen mechanischen Abrieb von Dämmstoffpartikeln zu bearbeiten.

In einer vorteilhaften Variante des Verfahrens wird das Schmelzmittel innerhalb eines am Rand des Schmelzmittels umlaufenden Vorsprungs in den Dämmstoff vorwärtsbewegt. Vorteilhaft bietet dieser Vorsprung zusätzliche Stabilität, um ein Verrutschen, beispielsweise ein Hin- und Herpendeln des Schmelzmittels auf der Dämmstoffoberfläche zu verhindern. In einer vorteilhaften Variante des Verfahrens ist der Vorsprung eine Schneide.

In einer weiteren vorteilhaften Variante des erfindungsgemäßen Verfahrens wird die Vorwärtsbewegung des Schmelzmittels in den Dämmstoff durch eine an der Vorrichtung angeordnete Anschlagscheibe begrenzt. Vorteilhaft kann hierdurch sichergestellt werden, dass die Vertiefung die gewünschte Tiefe aufweist.

Im Folgenden werden die erfindungsgemäße Vorrichtung und das erfindungsgemäße Verfahren zum Erstellen einer Vertiefung in Dämmstoffen beispielhaft anhand der in den nachfolgenden Figuren gezeigten Ausführungsformen näher erläutert. Es zeigen:
- Fig. 1a:: Perspektivische Ansicht einer beispielhaften Ausführungsform der erfindungsgemäßen Vorrichtung mit einem Bohrer und einer Anschlagscheibe
- Fig. 1b:: Perspektivische Ansicht einer beispielhaften Ausführungsform der erfindungsgemäßen Vorrichtung mit einer Zentrierspitze
- Fig. 1c:: Perspektivische Ansicht eines Antriebsstrangs ohne Schmelzmittel
- Fig. 2a, 2b, 2c, 2d:: Querschnitte der beispielhaften Ausführungsform der erfindungsgemäßen Vorrichtung während des Erstellens einer Vertiefung in einem Dämmstoff.

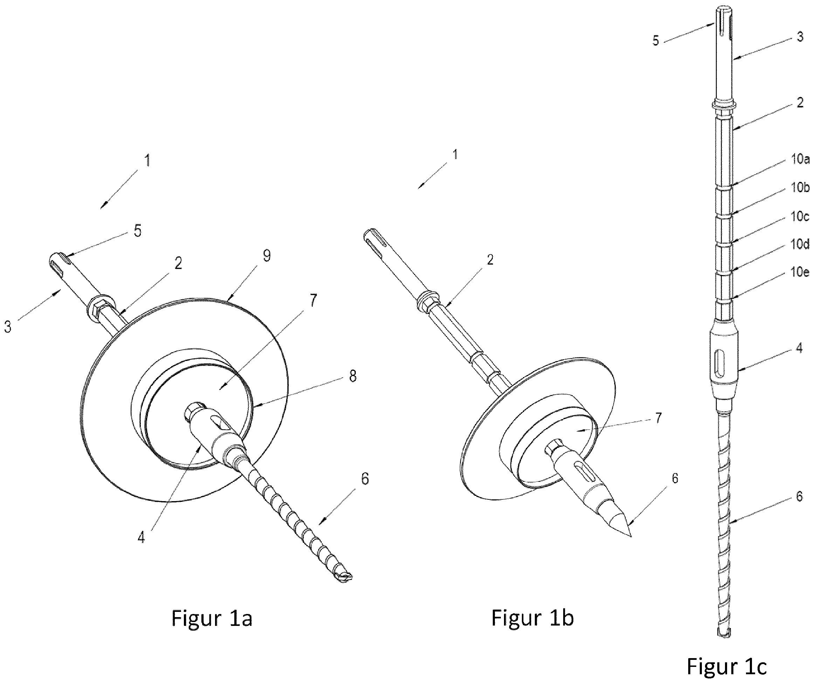

Figur 1a zeigt eine beispielhafte Ausführungsform der erfindungsgemäßen Vorrichtung 1 zum Erstellen einer Vertiefung in einen Dämmstoff. Die Vorrichtung 1 besteht aus einem Antriebsstrang 2 mit einem ersten Endbereich 3 und einem zweiten Endbereich 4. Vorzugsweise besteht der Antriebsstrang 2 aus einer Metalllegierung, wie beispielsweise einer Chrom/Titan Legierung oder einer Chrom/Vanadium Legierung. Der erste Endbereich 3 des Antriebsstrangs 2 ist ausgestaltet zum Verbinden mit einem Antriebswerkzeug. Hierfür kann, wie es in Figur 1a gezeigt ist, der Antriebsstrang 2 beispielsweise Einkerbungen 5 aufweisen, wie sie zum Verbinden mit einem SDS, SDS plus, SDS Quick Bohrfutter einer Bohrmaschine nötig sind. Alternativ hierzu kann der erste Endbereich 3 auch eine glatte Oberfläche haben, für eine Verbindung mit einem Schnellspann-Bohrfutter, oder sechseckig ausgestaltet sein, um mit einer bekannten Bitaufnahme verbunden zu werden.

In Figur 1a ist auch eine beispielhafte Ausführungsform für ein mit dem zweiten Endbereich 4 verbundenen Bohrer 6 dargestellt. Der Bohrer 6 kann über ein am zweiten Endbereich 4 des Antriebsstrangs 2 angebrachtes Bohrfutter drehfest mit dem Antriebsstrang 2 verbunden werden.

Die in Figur 1a gezeigte Ausführungsform zeigt auch ein Schmelzmittel 7, das um den Umfang des Antriebsstrangs 2 angeordnet ist und an dem Antriebsstrang 2 befestigt ist. In der gezeigten Ausführungsform hat das Schmelzmittel 7 eine im Wesentlichen senkrecht zum Antriebsstrang 2 ausgerichtete, geschlossene Oberfläche mit einer geringen Oberflächenrauheit, die beispielsweise aus Metall besteht. In einer bevorzugten Ausführungsform besteht das Schmelzmittel 7 zum Zwecke der Stabilität und wegen der guten Wärmespeichereigenschaften aus einem massiven oder hohlen Körper aus Metall, hier zum Beispiel aus einem zylindrischen Körper, der um den Antriebsstrang 2 angeordnet ist. Die Größe dieses zylindrischen Körpers bestimmt dabei die Größe der Vertiefung. Dabei bestimmt die Höhe des Zylinders die Tiefe der Vertiefung und der Durchmesser bestimmt den Durchmesser der Vertiefung. Das Schmelzmittel 7 also der zylindrische Körper kann auch auswechselbar sein, so dass unterschiedlich große Vertiefungen erzeugt werden können. Als Alternative zu Metall, sind dem Fachmann aber auch noch weitere Materialien bekannt, die ähnliche Stabilitäts- und Wärmeleiteigenschaften wie Metall haben, beispielsweise spezielle Kunststoffe oder Mineralien oder Kombinationen davon.

In der in Figur 1a gezeigten Ausführungsform befindet sich auch ein umlaufender Vorsprung 8 an dem Schmelzmittel 7. Dieser Vorsprung 8, der im gezeigten Beispiel eine umlaufende Schneide ist, ermöglicht eine weitere Zentrierung des Schmelzmittels 7 auf dem Dämmstoff, um ein Hin- und H e rpendeln des Schmelzmittels 7 auf der Dämmstoffoberfläche zu verhindern. Weiterhin ermöglicht dieser Vorsprung 8 eine bessere Wärmeübertragung von dem Schmelzmittel 7 in den Dämmstoff, um somit den Dämmstoff besser zu schmelzen. Der in Figur 1a gezeigte Vorsprung 8 hat eine geringe Oberflächenrauheit, um das Herausfallen von Dämmstoffspänen aus der Dämmstoffoberfläche im Wesentlichen zu vermeiden. Alternativ hierzu könnte der Vorsprung 8 aber auch eine sägeartige Schneide sein, die sich in den Dämmstoff hineinfräst.

Auch ist in der in Figur 1a gezeigten Ausführungsform eine Anschlagscheibe 9 an der dem Dämmstoff abweisenden Seite des Schmelzmittels 7 gezeigt. Diese Anschlagscheibe 9 begrenzt die Eindringtiefe des Schmelzmittels 7 in den Dämmstoff. Hierfür weist die Anschlagscheibe 9 einen größeren Umfang als der Umfang des darunter angeordneten Schmelzmittels 7 auf. Somit kommt die Anschlagscheibe 9 auf der Dämmstoffoberfläche zum Aufliegen, wenn eine maximale Tiefe der Vertiefung erreicht ist. Diese Anschlagscheibe 9 kann zum Beispiel aus einem schlecht-wärmeleitenden Kunststoff bestehen, um somit das Gewicht und die Kosten der Vorrichtung 1 zu verringern. Weiterhin hat ein solches Kunststoffmaterial den Vorteil, dass die Anschlagscheibe 9 nicht wie das Schmelzmittel 7 in den Dämmstoff eindringt, da es nicht genügend Wärme erzeugt zum Aufschmelzen des Dämmstoffs. Beispielsweise könnte die Anschlagscheibe auch aus dem gleichen Material wie das Schmelzmittel 7 bestehen und weiterhin mittels einer Schraubverbindung mit dem Schmelzmittel 7 verbunden sein oder alternativ mit dem Schmelzmittel 7 in einem Teil gefertigt sein.

Figur 1b zeigt eine beispielhafte Ausführungsform der erfindungsgemäßen Vorrichtung 1 zum Erstellen einer Vertiefung mit einer Zentrierspitze als Zentriermittel.

Alternativ zu der in Figur 1a gezeigten Ausführungsform mit dem Bohrer kann in der in Figur 1b gezeigten beispielhaften Ausführungsform auch eine zylindrische, spitzzulaufende Zentrierspitze als Zentriermittel verwendet werden. In einem Beispiel kann die Zentrierspitze in der gleichen Weise drehfest mit dem Antriebsstrang 2 verbunden sein, wie der in Figur 1a gezeigte Bohrer 6. Alternativ kann die Zentrierspitze an dem Schmelzmittel angeordnet sein. Durch die rotierende Zentrierspitze, die zuerst mit dem Dämmstoff in Kontakt kommt, wird die Position des Antriebsstrangs 2 und eines daran angeordneten Schmelzmittels 7 relativ zu der Dämmstoffoberfläche fixiert. Eine Zentrierspitze kann beispielsweise ausgewählt werden, wenn kein Bohrloch durch den Dämmstoff hindurch in den Untergrund erstellt werden soll. Alternativ hierzu sind dem Fachmann auch noch weitere Möglichkeiten bekannt, wie die Zentrierspitze befestigt werden kann.

Figur 1c zeigt eine Seitenansicht des Antriebsstrangs 2 ohne Schmelzmittel 7. In den in den Figuren 1 gezeigten Ausführungsformen kann das Schmelzmittel 7 entlang des Antriebsstrangs 2 verschiebbar angeordnet werden. Hierzu sind wie in Figur 1c gezeigt, entlang des Antriebsstrangs 2, um den Antriebsstrang 2 herum verlaufende, Einkerbungen 10a-e oder Vertiefungen in bestimmten Abständen angebracht. Mittels einer entsprechenden Zunge, die sich an einer Halterung des aufschiebbaren Schmelzmittels 7 befindet und das angepasst ist in die Einkerbungen 10a-e einzugreifen, kann das Schmelzmittel 7 an dem Antriebsstrang 2 befestigt werden. Beispielsweise kann diese Zunge durch eine Spannschraube realisiert werden. Vorteilhaft ermöglich dies, die Verwendung der Vorrichtung 1 zum Erstellen von gleich tiefen Vertiefungen für unterschiedlich dicke Dämmstoffe. Alternativ zu der in Figur 1c gezeigten Verbindung kann das Schmelzmittel 7 auch in einer anderen Weise mit dem Antriebsstrang 2 verbunden sein, wie beispielswiese mittels einer stufenlosen Klemmverbindung.

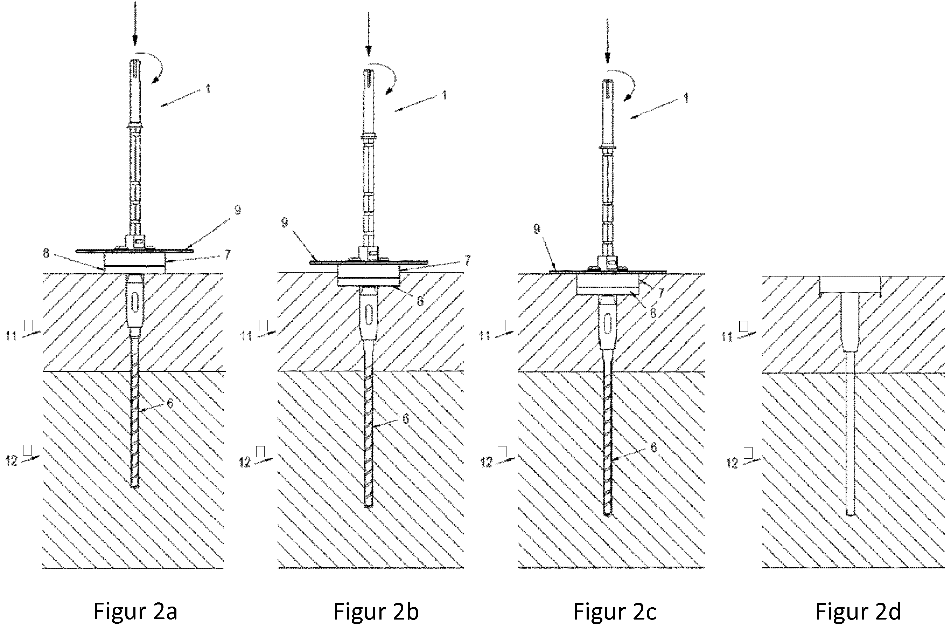

Die Figuren 2 zeigen Querschnittsansichten einer beispielhaften Ausführungsform der erfindungsgemäßen Vorrichtung 1 während des Erstellens einer Vertiefung in einem Dämmstoff 11.

In der in Figur 2a veranschaulichten Ausführungsform wird zuerst der an der Vorrichtung 1 angeordnete Bohrer 6 in einem im Wesentlichen rechten Winkel zu der Dämmstoffoberfläche angeordnet. Durch die Rotationsbewegung und den auf das Antriebswerkzeug ausgeübten Druck bohrt sich der an dem ersten Endbereich der Vorrichtung 1 angebrachte Bohrer 6 durch den Dämmstoff 11. In der in Figur 2a gezeigten Ausführungsform liegt bereits die parallel zur Oberfläche des Dämmstoffs 11 ausgerichtete Oberfläche des Schmelzmittels 7 auf der Oberfläche des Dämmstoffs 11 auf. Durch die rotierende Bewegung des Schmelzmittels 7 entsteht zwischen den beiden Oberflächen Wärme.

Wie in Figur 2b gezeigt, wird nachdem sich der Bohrer 6 durch den Dämmstoff 11 vorgearbeitet hat der Untergrund 12, beispielsweise ein Betonuntergrund, erreicht. Während sich der Bohrer 7 weiter durch die Rotationsbewegung des Bohrers 6 und den ausgeübten Druck, in den Untergrund 12 bewegt, schmelzt das Schmelzmittel 7 eine kreisförmig Vertiefung in die Oberfläche des Dämmstoffs. Wie bereits oben beschrieben wurde, kann dies beispielsweise mittels eines am Umfang des Schmelzmittels 7 angeordneten Vorsprungs 8 unterstützt werden.

Figur 2c zeigt die Vorrichtung 1 im Dämmstoff 11 nach dem Erstellen der Vertiefung. Die bei der bevorzugten Ausführungsform der Vorrichtung vorhandene Anschlagscheibe 9 kommt nach dem Erstellen der Vertiefung auf der Dämmstoffoberfläche zum Liegen und verhindert somit ein weiteres Einsenken des Schmelzmittels 7 in den Dämmstoff 11.

Die Figur 2d zeigt die mittels der erfindungsgemäßen Vorrichtung 1 erstellten Ausnehmung in dem Dämmstoff 11. Nach dem Entfernen der Vorrichtung 1 bleibt eine zylindrische Vertiefung mit einer geschlossenen Oberfläche in der Dämmstoffoberfläche übrig. Wenn wie in diesem Ausführungsbeispiel die Vorrichtung einen Bohrer 6 aufweist, entstand zudem auch noch ein Bohrloch, das durch den Dämmstoff 11 in den Untergrund 12 hineinreicht. In einem nächsten Arbeitsschritt kann nun ein Dämmstoffhalter in das Bohrloch gesteckt werden, bis der Dübelteller des Dämmstoffhalters in der mit der erfindungsgemäßen Vorrichtung 1 erstellten Ausnehmung aufliegt. Mittels des darauffolgenden Einbringens eines Spreizelements in die Dübelhülse kann der untere Bereich des Dübelschafts aufgespreizt werden, um somit den Dämmstoffhalter in dem Untergrund 12 zu verankern. Die Ausnehmung kann danach mit einer Dämmstoffscheibe, beispielsweise einer Dämmstoffrondelle verschlossen werden, um eine homogen Oberfläche des Dämmstoffs 11 herzustellen.

## Patentansprüche

1. Vorrichtung (1) zum Erstellen einer Vertiefung in einem Dämmstoff (11), aufweisend
einen Antriebsstrang (2), wobei der Antriebsstrang (2) in einem ersten Endbereich (3) angepasst ist zum Verbinden mit einem Antriebswerkzeug,
**dadurch gekennzeichnet, dass** die Vorrichtung (1) weiterhin aufweist
ein Schmelzmittel (7) zum Schmelzen der Vertiefung, wobei das Schmelzmittel (7) an dem Antriebsstrang (2) angeordnet ist und sich im Wesentlichen senkrecht zum Antriebsstrang (2) erstreckt, und wobei das Schmelzmittel (7) eine im Wesentlichen senkrecht zum Antriebsstrang (2) ausgerichtete, geschlossene Oberfläche hat und das Schmelzmittel (7) die Vertiefung mittels Kontaktreibung zwischen der geschlossenen Oberfläche und der Oberfläche des Dämmstoffs in den Dämmstoff (11) schmilzt, und eine Anschlagscheibe (9), die ausgestaltet ist eine Bewegung des Schmelzmittels (7) in den Dämmstoff (11) zu begrenzen, deren die Dämmstoffoberfläche kontaktierende Seite in einem Abstand zu dem Dämmstoff (11) kontaktierenden Seite des Schmelzmittels (7) angeordnet ist, um eine Vertiefung mit einer entsprechenden Tiefe herzustellen.

2. Die Vorrichtung (1) gemäß Anspruch 1, **dadurch gekennzeichnet, dass** das Schmelzmittel (7) an der den Dämmstoff (11) kontaktierenden Seite angepasst ist, die Dämmstoffoberfläche ohne einen mechanischen Abrieb von Dämmstoffpartikeln zu bearbeiten.

3. Die Vorrichtung (1) gemäß Anspruch 1 oder 2, **dadurch gekennzeichnet, dass** das Schmelzmittel (7) rund ist.

4. Die Vorrichtung (1) gemäß einem der vorhergehenden Ansprüche, **dadurch gekennzeichnet, dass** das Schmelzmittel (7) einen am Rand umlaufenden Vorsprung (8) aufweist, der sich im Wesentlichen parallel zum Antriebsstrang (2) erstreckt.

5. Die Vorrichtung (1) gemäß Anspruch 4, **dadurch gekennzeichnet, dass** der am Rand des Schmelzmittels (7) umlaufende Vorsprung (8) eine Schneide ist.

6. Die Vorrichtung (1) gemäß einem der vorhergehenden Ansprüche, **dadurch gekennzeichnet, dass** die den Dämmstoff (11) kontaktierende Oberfläche des Schmelzmittels (7) aus Metall besteht.

7. Die Vorrichtung (1) gemäß Anspruch 1, **dadurch gekennzeichnet, dass** der Umfang der Anschlagscheibe (9) größer ist als der Umfang des Schmelzmittels (7).

8. Die Vorrichtung (1) gemäß einem der vorhergehenden Ansprüche, **dadurch gekennzeichnet, dass** der Antriebsstrang (2) in einem zweiten Endbereich (4), der dem ersten Endbereich (3) gegenüberliegt, angepasst ist zum Verbinden mit einem Bohrer.

9. Die Vorrichtung (1) gemäß einem der vorhergehenden Ansprüche, **dadurch gekennzeichnet, dass** die Vorrichtung (1) eine Zentrierspitze aufweist.

10. Die Vorrichtung (1) gemäß einem der vorhergehenden Ansprüche, **dadurch gekennzeichnet, dass** das Schmelzmittel (7) lösbar an dem Antriebsstrang (2) befestigt ist.

11. Ein Verfahren zum Erstellen einer Vertiefung in einem Dämmstoff (11), wobei das Verfahren die folgenden Schritte aufweist:
Drehen eines Antriebsstrangs (2) und eines daran angeordneten Schmelzmittels (7) mit einer im Wesentlichen senkrecht zum Antriebsstrang (2) ausgerichteten, geschlossenen Oberfläche, Vorwärtsbewegen des Schmelzmittels (7) gegen den Dämmstoff (11), und
Schmelzen einer Vertiefung in den Dämmstoff (11) mittels Kontaktreibung zwischen der geschlossenen Oberfläche des Schmelzmittels (7) und der Oberfläche des Dämmstoffs (11).

12. Das Verfahren gemäß Anspruch 11, wobei das Schmelzmittel (7) die Vertiefung in den Dämmstoff (11) mit einer den Dämmstoff (11) kontaktierenden Oberfläche einschmilzt, die angepasst ist, die Dämmstoffoberfläche ohne einen mechanischen Abrieb von Dämmstoffpartikeln zu bearbeiten.

13. Das Verfahren gemäß einem der Ansprüche 11 und 12, wobei das Schmelzmittel (7) innerhalb eines am Rand des Schmelzmittels (7) umlaufenden Vorsprungs (8) in den Dämmstoff (11) vorwärtsbewegt wird.

14. Das Verfahren gemäß einem der Ansprüche 11 bis 13, wobei die Vorwärtsbewegung des Schmelzmittels (7) in den Dämmstoff (11) begrenzt wird durch eine Anschlagscheibe (9).

## Claims

1. An apparatus (1) for forming a recess in an insulation (11), comprising
a drive section (2), wherein the drive section (2) is adapted in a first end area (3) for connecting with a drive tool,
**characterized in that** the apparatus (1) further comprises a melting means (7) for melting the recess, wherein the melting means (7) is arranged at the drive section (2) and extends substantially perpendicular to the drive section (2) and wherein the melting means (7) has a closed surface which is substantially perpendicular aligned to the drive section (2) and the melting means (7) melts the recess in the insulation (11) by means of contact friction between the closed surface and the surface of the insulation (11) and
a stop disc (9), which is developed to limit the movement of the melting means (7) in the insulation (11), wherein the side of the stop disc which contacts the insulation surface is arranged in a distance to the side of the melting means (7) which contacts the insulation (11), in order to form a recess with a corresponding depth.

2. The apparatus (1) according to claim 1, **characterized in that** the melting means (7) is adapted at the side which contacts the insulation (11) to process the insulation surface without mechanical abrasion of insulation particles.

3. The apparatus (1) according to claims 1 or 2, **characterized in that** the melting means (7) is round.

4. The apparatus (1) according to any of the preceding claims, **characterized in that** the melting means (7) comprises at a border a circumferential protrusion (8), which extends substantially parallel to the drive section (2).

5. The apparatus (1) according to claim 4, **characterized in that** the circumferential protrusion (8) at the border of the melting means (7) is a blade.

6. The apparatus (1) according to any of the preceding claims, **characterized in that** the surface of the melting means (7) which contacts the insulation (11) consists of metal.

7. The apparatus (1) according to claim 1, **characterized in that** the circumference of the stop disc (9) is greater than the circumference of the melting means (7).

8. The apparatus (1) according to any of the preceding claims, **characterized in that** the drive section (2) is adapted in a second end area (4), which is opposite to the first end area (3), for connecting with a drill.

9. The apparatus (1) according to any of the preceding claims, **characterized in that** the apparatus (1) comprises a centering tip.

10. The apparatus (1) according to any of the preceding claims, **characterized in that** the melting means (7) is removable connected to the drive section (2).

11. A method for forming a recess in an insulation (11), wherein the method comprises the following steps:
rotating a drive section (2) and a melting means (7) arranged at the drive section (2) with a closed surface which is substantially perpendicular arranged at the drive section (2),
moving forward of the melting means (7) against the insulation (11) and melting a recess in the insulation (11) by means of contact friction between the closed surface of the melting means (7) and the surface of the insulation (11).

12. The method according to claim 11, wherein the melting means (7) melts the recess in the insulation (11) with a surface, which contacts the insulation (11) and which is adapted to process the insulation surface without mechanical abrasion of insulation particles.

13. The method according to any of claims 11 and 12, wherein the melting means (7) is moved forward in the insulation (11) within a circumferential protrusion (8) at the border of the melting means (7).

14. The method according to any of claims 11 to 13, wherein the moving forward of the melting means (7) in the insulation (11) is limited by means of a stop disc (9).

## Revendications

1. Appareil (1) pour former un évidement dans un isolant (11), comprenant
une section d'entraînement (2), dans lequel la section d'entraînement (2) est adaptée dans une première zone d'extrémité (3) pour connexion à un outil d'entraînement, **caractérisé en ce que** l'appareil (1) comprend en outre
un moyen de fusion (7) pour faire fondre l'évidement, dans lequel le moyen de fusion (7) est agencé au niveau de la section d'entraînement (2) et s'étend essentiellement perpendiculaire à la section d'entraînement (2) et dans lequel le moyen de fusion (7) a une surface fermée qui est alignée essentiellement perpendiculairement par rapport à la section d'entraînement et le moyen de fusion (7) fait fondre l'évidement dans l'isolant (11) au moyen d'un frottement de contact entre la surface fermée et la surface de l'isolant et
un disque d'arrêt (9) qui est développé pour limiter le mouvement du moyen de fusion (7) dans l'isolant (11), dans lequel la surface de la face du disque d'arrêt qui est en contact avec l'isolant est agencée à une certaine distance par rapport à la face du moyen de fusion qui est en contact avec l'isolant, afin de former un évidement avec une profondeur correspondante.

2. Appareil (1) selon la revendication 1, **caractérisé en ce que** le moyen de fusion (7) est adapté sur la face qui est en contact avec l'isolant (11) pour travailler sur la surface d'isolant sans abrasion mécanique des particules d'isolant.

3. Appareil (1) selon les revendications 1 ou 2, **caractérisé en ce que** le moyen de fusion (7) est rond.

4. Appareil (1) selon l'une quelconque des revendications précédentes, **caractérisé en ce que** le moyen de fusion (7) comprend à un bord une saillie circonférentielle (8), qui s'étend essentiellement parallèle à la section d'entraînement (2).

5. Appareil (1) selon la revendication 4, **caractérisé en ce que** la saillie circonférentielle (8) au bord du moyen de fusion (7) est une lame.

6. Appareil (1) selon l'une quelconque des revendications précédentes, **caractérisé en ce que** la surface du moyen de fusion (7) qui est en contact avec l'isolant (11) est constituée de métal.

7. Appareil (1) selon la revendication 1, **caractérisé en ce que** la circonférence du disque d'arrêt (9) est supérieure à la circonférence du moyen de fusion (7).

8. Appareil (1) selon l'une quelconque des revendications précédentes, **caractérisé en ce que** la section d'entraînement (2) est adaptée dans une seconde zone d'extrémité (3), qui fait face à la première zone d'extrémité, pour connexion à un foret.

9. Appareil (1) selon l'une quelconque des revendications précédentes, **caractérisé en ce que** l'appareil (1) comprend une pointe de centrage.

10. Appareil (1) selon l'une quelconque des revendications précédentes, **caractérisé en ce que** le moyen de fusion (7) est amovible connecté à la section d'entraînement (2).

11. Procédé pour former un évidement dans un isolant (11), dans lequel le procédé comprend les étapes suivantes :
tourner une section d'entraînement (2) et un moyen de fusion (7) agencé au niveau de la section d'entraînement (2) avec une surface fermée qui est agencée essentiellement perpendiculairement à la section d'entraînement,
faire avancer le moyen de fusion (7) contre l'isolant (11) et
faire fondre un évidement dans l'isolant (11) au moyen d'un frottement de contact entre la surface fermée du moyen de fusion (7) et la surface de l'isolant (11).

12. Procédé selon la revendication if, dans lequel le moyen de fusion (7) fait fondre l'évidement dans l'isolant (11) avec une surface, laquelle est en contact avec l'isolant (11) et laquelle est adaptée pour travailler sur la surface de l'isolant sans abrasion mécanique des particules d'isolant.

13. Procédé selon l'une quelconque des revendications 11 et 12, dans lequel le moyen de fusion est avancé dans l'isolant (11) dans une saillie circonférentielle (8) au bord du moyen de fusion (7).

14. Procédé selon l'une quelconque des revendications 11 à 13, dans lequel l'avancement du moyen de fusion (7) dans l'isolant (11) est limité au moyen d'un disque d'arrêt (9).
